# EUROPÄISCHE PATENTANMELDUNG

(11) **EP 0 906 884 A1**
(43) Veröffentlichungstag der Anmeldung: **07.04.1999**
(21) Anmeldenummer: 97117086.5
(22) Anmeldetag: 02.10.1997
(51) Int. Cl.: B65H 26/00, A01F 15/07, D06H 1/04

(54) **Langgestrecktes Netz auf einem Träger, Verfahren zu seiner Herstellung, Vorrichtung zum Abziehen des Netzes von dem Träger und Verwendung des Netzes**

(71) Anmelder: JÜNEMANN, Ulrich, D-34119 Kassel (DE)
(72) Erfinder: JÜNEMANN, Ulrich, D-34119 Kassel (DE)
(74) Vertreter: Patentanwälte Rehberg + Hüppe

(57) **Zusammenfassung**

Ein auf einen Träger (3) aufgewickeltes oder aufgerafftes langgestrecktes Netz (1) weist eine Markierung auf, die darauf hinweist, daß beim Abziehen des Netzes (1) von dem Träger (3) in bestimmtem Abstand (7) von der Markierung das Netzende (2) erreicht werden wird. Die Markierung weist ihrerseits mindestens einen Metallbandabschnitt (8) auf mindestens einer Oberfläche (21, 22) des Netzes (1) auf, der bei der Herstellung des Netzes (1) durch Aufkleben eines Abschnitts von selbstklebendem Metallband aufgebracht wird. Eine Vorrichtung zum Abziehen des Netzes (1) von dem Träger (3) weist einen Metalldetektor auf. Beim Verwenden des Netzes (1) wird nach dem Erkennen der Markierung das Netzende (2) des bisherigen Netzes (1) an den Netzanfang eines neuen Netzes angenäht und dann das neue Netz von dessen Träger abgezogen.

## Beschreibung

Die Erfindung bezieht sich auf ein auf einen Träger aufgewickeltes oder aufgerafftes langgestrecktes Netz. Bei dem Netz kann es sich beispielsweise um ein Pflanznetz für Blumenzwiebeln oder um ein Netz zum Einwickeln von Rundballen aus Stroh oder Heu handeln. Der Träger für das langgestreckte Netz kann beispielsweise eine Rolle oder eine Manschette sein, die in der Regel aus Pappe besteht.

Weiterhin bezieht sich die Erfindung auf ein Verfahren zur Herstellung des Netzes mit der Markierung, eine Vorrichtung zum Abziehen des Netzes von seinem Träger, mit einer Halterung für den Träger, und auf eine Verwendung des Netzes in Verbindung mit der Vorrichtung.

Die Vorrichtung zum Abziehen des Netzes von seinem Träger kann in Abhängigkeit von dem Netz beispielsweise Bestandteil einer Blumenzwiebelpflanzmaschine oder einer Rundballenpresse sein.

Beim Pflanzen von Blumenzwiebeln mit einer Blumenzwiebelpflanzmaschine besteht die Gefahr, daß der Bediener der Blumenzwiebelpflanzmaschine das Netzende des Pflanznetzes nicht rechtzeitig erkennt. So kann es passieren, daß das Netzende bereits in den Boden eingebracht ist, bevor der Bediener hierauf aufmerksam wird. Gewünscht ist jedoch, daß das Netzende mit dem Netzanfang eines nächsten Netzes verbunden wird, um den Pflanzvorgang kontinuierlich fortzusetzen. Hierzu muß der Bediener dann das Netzende notfalls wieder ausgraben, da er es sonst nicht mehr mit dem Netzanfang des nächsten Netzes verbinden kann.

Wünschenswert wäre daher eine Markierung an dem Netz, die darauf hinweist, daß beim Abziehen des Netzes von dem Träger in bestimmtem Abstand von der Markierung das Netzende erreicht werden wird, um den Bediener einer Blumenzwiebelpflanzmaschine auf das nahende Netzende aufmerksam zu machen.

Bei zu sogenannten Faxrollen aufgewickelten Papierbahnen für Faxgeräte ist es bekannt, daß die Papierbahnen vor dem jeweiligen Papierende in einem ihrer Randbereiche mit einer farbigen Markierung versehen ist, um auf den notwendigen Wechsel der Faxrolle aufmerksam zu machen.

Es wäre aber extrem aufwendig, ein endlos hergestelltes Netz in seinem gesamten Endbereich, daß heißt über einige Meter vor dem Netzende hinweg mit einer farbigen Markierung zu versehen.

Zudem würde eine solche farbige Markierung vom Bediener einer Blumenzwiebelpflanzmaschine nur dann zuverlässig wahrgenommen, wenn er sich auf das von dem Träger ablaufende Netz konzentriert. Dies ist angesichts der vielfältigen Aufgaben des Bedieners nicht zuverlässig gewährleistet. Zudem ist zu berücksichtigen, daß bei einer Blumenzwiebelpflanzmaschine das Netz mit einer Geschwindigkeit von 1 bis 2 Metern pro Sekunde von dem Träger abgezogen wird und so eine 10 Meter vor dem Netzende beginnende Markierung nur wenige Sekunden Zeit läßt, das nahende Netzende zu erkennen, selbst wenn sie bis zum Netzende durchgeht.

Bei einer Rundballenpresse besteht eine ähnliche Problematik. Hier wird zwar das Netz nicht kontinuierlich von seinem Träger abgezogen, für jeden Rundballen werden aber einige Meter Netz benötigt, und das Netz auf dem Träger ist in der Regel für den Bediener der Rundballenpresse nicht sichtbar. Wenn der Bediener eine farbige Markierung des um den oder die letzten Rundballen gewickelten Netzes nicht sofort erkennen würde, wäre daher nicht sichergestellt, daß der jeweils verbliebene Rest des Netzes auf dem Träger noch für ein vollständiges Einwickeln des nächsten Rundballens ausreicht.

Der Erfindung liegt daher die Aufgabe zugrunde, ein Netz der eingangs beschriebenen Art mit einer Markierung aufzuzeigen, die zuverlässig darauf hinweist, daß beim Abziehen des Netzes von dem Träger in bestimmtem Abstand von der Markierung das Netzende erreicht werden wird, und die geringem Aufwand anbringbar ist. Weiterhin soll ein Verfahren zur Herstellung des Netzes, eine Vorrichtung der eingangs beschriebenen Art zum Abziehen des Netzes von seinem Träger und eine Verwendung des Netzes in Verbindung mit der Vorrichtung aufgezeigt werden.

Das diese Aufgabe lösende Netz der eingangs beschriebenen Art ist dadurch gekennzeichnet, daß eine Markierung, die darauf hinweist, daß beim Abziehen des Netzes von dem Träger in bestimmtem Abstand von der Markierung das Netzende erreicht werden wird, mindestens einen auf mindestens eine Oberfläche des Netzes aufgebrachten Metallbandabschnitt aufweist. Der Metallbandabschnitt ist im Gegensatz zu einer farbigen Markierung nicht als direkter Hinweis für einen Bediener vorgesehen. Er soll vielmehr von einem Detektor erkannt werde. Das Erkennen des Metallbandabschnitts durch den Detektor ist wiederum im Gegensatz zu einer farbigen Markierung eines Netzes zuverlässig realisierbar, wobei der Detektor dann ein Netzende-Signal ausgibt. Dieses Netzende-Signal kann dem Bediener beispielsweise einer Blumenzwiebelpflanzmaschine unmißverständlich akustisch und oder optisch anzeigen, daß das Netzende in bestimmtem Abstand naht, oder die Blumenzwiebelpflanzmaschine kann direkt durch das Netzende-Signal gestoppt werden. Das Erkennen des Metallbandabschnitts als Markierung für das nahende Netzende ist auch noch unter solchen Randbedingungen, wie Staubentwicklung, Feuchtigkeit und dergleichen, zuverlässig möglich, unter denen Detektoren auf farbige Markierungen nicht reproduzierbar ansprechen.

Vorzugsweise weist mindestens einer der Metallbandabschnitte eine Breite von mindestens 2 cm, vorzugsweise von mehr als 4 cm auf. Die Breite des Metallbandabschnitts vergrößert nicht nur die von dem Detektor zu erfassende Metallmenge, sondern sie reduziert auch die Anforderungen an die Relativpositionierung des Detektors zu dem Metallbandabschnitt. Dies ist insbesondere von Bedeutung, weil ein von seinem Träger abgezogenes Netz kein Gebilde mit absolut starren Abmessungen und Relativpositionen ist.

Weiterhin ist es bevorzugt, daß mindestens einer der Metallbandabschnitte eine Länge von mindestens 10 cm, vorzugsweise von mehr als 20 cm aufweist, wobei der Metallbandabschnitt parallel zu der Längserstreckung des Netzes angeordnet ist. Auch diese Ausbildung des Metallbandabschnitts erleichtert sein Detektieren. Das Netz wird mit relativ hoher Geschwindigkeit von seinem Träger abgezogen. bei einer nur geringen Längserstreckung des Metallbandabschnitts, hat der Detektor daher nur wenig Zeit, den Metallbandabschnitt zu erkennen. Mit zunehmender Länge des Metallbandabschnitts, wird sein Detektieren immer einfacher. In diesem Zusammenhang versteht sich, daß die für ein zuverlässiges Detektieren hinreichende Länge des Metallbandabschnitts, mit der er sich parallel zu der Längserstreckung des Netzes ausdehnt, von der Abziehgeschwindigkeit des Netzes von seinem Träger abhängt. Je größer die Abziehgeschwindigkeit ist, desto größer sollte auch die Länge des Metallbandabschnitts sein. Bei einer Abziehgeschwindigkeit von 1,6 m/s ist beispielsweise eine Länge des Metallbandabschnitts von über 20 cm sinnvoll.

Eine vergleichsweise gut definierte Lage auf der Oberfläche des Netzes weisen der bzw. die Metallbandabschnitte auf, wenn sie in den Randbereichen des Netzes angeordnet sind.

Vorzugsweise sind die aufgebrachten Metallbandabschnitte auf der beim Einsatz des Netzes oberen Oberfläche des Netzes angeordnet. Ein Detektor für die Metallbandabschnitte wäre entsprechend oberhalb des Netzes anzuordnen. Damit würde er seinen maximalen Abstand zum Boden und damit zu etwaig auftretenden Verunreinigungsquellen aufweisen.

Als gut geeignet haben sich Abschnitte von Aluminiumband für die Metallbandabschnitte herausgestellt. Sie sind preisgünstig verfügbar. Gleichzeitig ist Aluminium durch Metalldetektoren gut erkennbar.

Zur erfindungsgemäßen Herstellung des Netzes, bei der das Netz mit dem späteren Netzende beginnend produziert und anschließend auf den Träger aufgebracht wird, wird 3 bis 20 m, vorzugsweise 5 bis 15 m nach dem Netzende mindestens ein Abschnitt von selbstklebendem Metallband auf mindestens eine Oberfläche des Netzes aufgeklebt. Das Aufkleben der Abschnitte von selbstklebendem Metallband ist mit einem minimalen Aufwand bei der Herstellung des Netzes verbunden. Der Abstand der Abschnitte des selbstklebenden Metallbands zu dem Netzende ist auf die Art des Netzes abzustimmen. Beispielsweise sollte nach dem Erkennen des Netzendes bei einem Netz zum Einwickeln von Rundballen aus Heu oder Stroh noch soviel Netz auf dem Träger vorhanden sein, daß noch mindestens der aktuelle Rundballen zuende eingewickelt werden kann.

Eine erfindungsgemäße Vorrichtung der eingangs beschriebenen Art zum Abziehen des Netzes von seinem Träger weist einen Detektor mit mindestens einem Metalldetektor auf. Der Metalldetektor kann so ausgebildet sein, daß er den Metallbandabschnitt durch eine Änderung eines von ihm ausgestrahlten elektrischen oder elektromagnetischen Fels erkennt, wobei die Feldänderung auf den kapazitiven Eigenschaften des Metallbandabschnitts beruht.

Der Metalldetektor zum Erkennen des Metallbandabschnitts kann aber auch zwei über die Oberfläche des Netzes abgleitende oder abrollend Kontakte aufweisen, wobei ein Metallbandabschnitt dadurch erkannt wird, daß er eine elektrisch leitende Verbindung zwischen den beiden Kontakten schafft. Bei einer Wechselspannung zwischen den beiden Kontakten wäre hierbei nicht einmal eine nichtleitende Oberfläche des Metallbandabschnitts kritisch.

Bei einem kontaktlos arbeitenden Detektor ist vorzugsweise mindestens einer der Metalldetektoren stromab der Halterungen für den Träger an einer Stelle über dem Randbereich des Netzes angeordnet, an der sich keine weiteren metallischen Bauteile der Vorrichtung in der Nähe des Randbereichs des Netzes befinden. Kritisch sind insbesondere bewegte metallische Bauteile der Vorrichtung, die zu Störsignalen des Metalldetektors führen können. Sie sollten daher in keinem Fall in der Nähe des Metalldetektors angeordnet sein, damit dieser die durchlaufenden Metallbandabschnitte zuverlässig erkennt.

Bei der erfindungsgemäßen Verwendung des Netzes in Verbindung mit der Vorrichtung wird nach dem Netzende-Signal des Detektors das Netz bis zu seinem Ende von dem Träger abgezogen, anschließend der Träger aus der Halterung entfernt und der Träger eines neuen Netzes in die Halterung eingebracht, vorher gleichzeitig oder hinterher das Netzende des alten Netzes mit dem Netzanfang des neuen Netzes vernäht und dann das neue Netz von seinem Träger abgezogen. Durch das Netzende-Signal des Detektors besteht dabei keine Gefahr, daß das Netzende unbemerkt durchläuft.

Bei einer Rundballenpresse ist es nicht unbedingt sinnvoll, das Netzende mit dem Netzanfang des nächsten Netzes zu vernähen. Hier reicht es aus, ein neues Netz mit Träger für das Einwickeln des nächsten Rundballens in der Halterung anzuordnen.

Die Erfindung wird im folgenden anhand von Ausführungsbeispielen näher erläutert und beschrieben. Dabei zeigt
- Figur 1: perspektivisch ein teilweise aufgewickeltes Netz,
- Figur 2: eine Seitenansicht eines Metallbandabschnitts,
- Figur 3: den prinzipiellen Aufbau einer Vorrichtung zum Abziehen des Netzes gemäß Figur 1 und Figur 4 einen Querschnitt durch eine alternative Ausführungsform des Netzes.

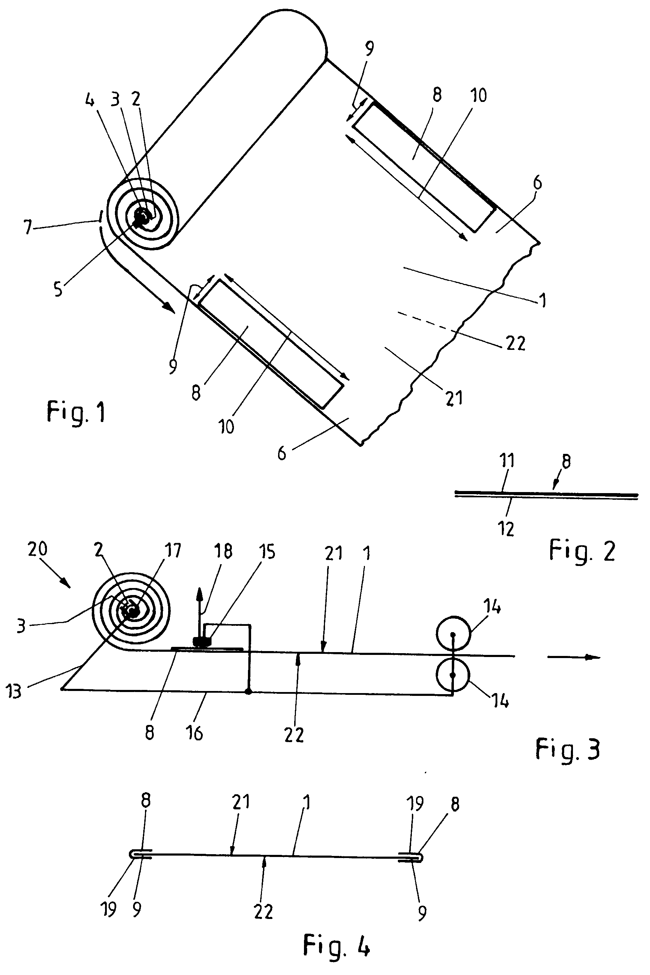

Das in Figur 1 dargestellte Netz 1 ist nur in Form seiner äußeren Abmessungen wiedergegeben. Nicht dargestellt sind die einzelnen Maschen. Offengelassen ist auch, ob es sich um ein einfaches Netz oder um ein schlauchförmiges und damit doppeltes Netz handelt. Ein einfaches Netz könnte z. B. zum Einwickeln von Rundballen aus Heu oder Stroh oder als eine Lage eines zweilagigen Pflanznetzes verwendet werden. Ein schlauchförmiges Netz könnte ebenfalls als Pflanznetz für Blumenzwiebeln oder für andere Zwecke verwendet werden. Mit seinem Netzende 2 voran, ist das Netz 1 auf einen Träger 3 aufgewickelt, bei dem es sich um eine Papprolle 4 handelt. In die Papprolle 4 ist eine Tragwelle 5 zur Lagerung des Netzes 1 mit dem Träger 3 eingeschoben. In einem Abstand 7 zu dem Netzende 2 sind auf die in Figur 1 nach oben zeigende Oberfläche 21 des Netzes 1 zwei Metallbandabschnitte 8 aufgebracht. Angeordnet sind die Metallbandabschnitte 8 in den sich gegenüberliegenden Randbereichen 6 des Netzes 1. Die Metallbandabschnitte 8 weisen eine Breite 9 quer zu der und eine Länge 10 in der Längserstreckungsrichtung des langgestreckten Netzes 1 auf. Bei einem Netz 1, das als Pflanznetz für Blumenzwiebeln ausgebildet ist, beträgt der Abstand 7 typischerweise 10 m, die Breite 9 typischerweise 5 cm und die Länge 10 typischerweise 40 cm.

Einer der Metallbandabschnitte 8 ist in Figur 2 in einer Seitenansicht dargestellt. Der Metallbandabschnitt 8 weist neben einer Metallschicht 11 eine Klebschicht 12 auf, d. h. der Metallbandabschnitt 8 ist selbstklebend ausgebildet. Zum Anbringen auf einer der Oberflächen 21, 22 des Netzes 1 wird er beispielsweise von einer Bandrolle abgelängt und dann auf die jeweilige Oberfläche des Netzes 1 aufgeklebt.

Die in Figur 3 skizzierte Vorrichtung 20 zum Abziehen des Netzes 1 von dem Träger 3 weist eine Halterung 13 für den Träger 3, Abzugrollen 14 für das Netz 1 und Metalldetektoren 15 zum Erkennen der Metallbandabschnitte 8 auf. Die Halterung 13, die Abzugrollen 14 und der Metalldetektor 15 sind an einem Rahmen 16 gelagert. Die Halterung 13 weist ein Paar von Gabeln 17 zum endseitigen Einlegen der Tragwelle 5 auf, die in den Träger 3 eingeschoben ist. Die Abzugrollen 14 ziehen das Netz 1 von dem Träger 3 ab, wobei der Träger 3 um seine Achse verdreht wird. Zwei über den einander gegenüberliegenden Randbereichen 6 des Netzes 1 angeordnete Metalldetektoren erkennen die Metallbandabschnitte 8 und damit das nahende Netzende 2. Die Metalldetektoren 15 geben daraufhin ein Netzende-Signal 18 aus, das beispielsweise zum Anhalten der Abzugrollen 14 benutzt werden kann, damit das Netzende 2 mit dem Netzanfang eines neuen Netzes verbunden und der Träger 3 des neuen Netzes 1 in die Halterung 13 eingebracht werden kann. Die Metalldetektoren 15 reagieren auf die sich ändernde elektrische Kapazität in ihrer Umgebung. Dabei ist darauf geachtet, daß sich keine metallischen Teile der Vorrichtung 20 unterhalb der Metalldetektoren 15 befinden, die zu Störsignalen führen könnten. Weiterhin sind die Metalldetektoren 15 bewußt oberhalb des Netzes 1 angeordnet, um möglichst weit von einem darunter befindlichen Boden und von diesem resultierenden Verschmutzungen entfernt zu sein. Angepaßt an die Lage der Metalldetektoren 15 sind die Metallbandabschnitte 8 auf die obere Oberfläche 21 des Netzes 1 bezogen und auf dessen Ausrichtung bei der Verwendung aufgebracht.

Als besonders geeignet hat sich Aluminiumband für die Metallbandabschnitte herausgestellt. Aluminiumband ist leicht verformbar und folgt damit allen Bewegungen des Netzes, ohne sich von diesem in unerwünschter Weise abzulösen. Aluminiumband kann nicht nur auf eine der beiden Oberflächen 21, 22 des Netzes 1 aufgeklebt werden, es ist auch möglich, daß Aluminiumband 19 um die Randbereiche 6 des Netzes 1 herum aufzubringen, wie dies in Figur 4 skizziert ist.

### BEZUGSZEICHENLISTE

- 1 -: Netz
- 2 -: Netzende
- 3 -: Träger
- 4 -: Papprolle
- 5 -: Tragwelle
- 6 -: Randbereich
- 7 -: Abstand
- 8 -: Metallbandabschnitt
- 9 -: Breite
- 10 -: Länge
- 11 -: Metallschicht
- 12 -: Klebschicht
- 13 -: Halterung
- 14 -: Abzugrolle
- 15 -: Metalldetektor
- 16 -: Rahmen
- 17 -: Gabel
- 18 -: Netzende-Signal
- 19 -: Aluminiumband
- 20 -: Vorrichtung
- 21 -: obere Oberfläche
- 22 -: untere Oberfläche

## Patentansprüche

1. Auf einen Träger aufgewickeltes oder aufgerafftes langgestrecktes Netz, **dadurch gekennzeichnet**, daß eine Markierung, die darauf hinweist, daß beim Abziehen des Netzes (1) von dem Träger (3) in bestimmtem Abstand (7) von der Markierung das Netzende (2) erreicht werden wird, mindestens einen auf mindestens eine Oberfläche (21, 22) des Netzes (1) aufgebrachten Metallbandabschnitt (8) aufweist.

2. Netz nach Anspruch 1, **dadurch gekennzeichnet**, daß mindestens einer der Metallbandabschnitte (8) eine Breite (9) von mindestens 2 cm, vorzugsweise von mehr als 4 cm aufweist.

3. Netz nach Anspruch 1 oder 2, **dadurch gekennzeichnet**, daß mindestens einer der Metallbandabschnitte (8) eine Länge (10) von mindestens 10 cm, vorzugsweise von mehr als 20 cm aufweist, wobei der Metallbandabschnitt (8) parallel zu der Längserstreckung des Netzes (1) angeordnet ist.

4. Netz nach einem der Ansprüche 1 bis 3, **dadurch gekennzeichnet**, daß in mindestens einem der beiden Randbereiche (6) des Netzes (1) mindestens ein Metallbandabschnitt (8) angeordnet ist.

5. Netz nach einem der Ansprüche 1 bis 4, **dadurch gekennzeichnet**, daß mindestens ein Metallbandabschnitt (8) auf der beim Einsatz des Netzes (1) oberen Oberfläche (21) des Netzes (1) angeordnet ist.

6. Netz nach einem der Ansprüche 1 bis 5, **dadurch gekennzeichnet**, daß die Metallbandabschnitte (8) Abschnitte von Aluminiumband (19) sind.

7. Verfahren zur Herstellung des Netzes nach einem der Ansprüche 1 bis 6, wobei das Netz mit dem späteren Netzende beginnend produziert und anschließend auf den Träger aufgebracht wird, **dadurch gekennzeichnet**, daß 3 bis 20 m, vorzugsweise 5 bis 15 m nach dem Netzende (2) mindestens ein Abschnitt von selbstklebendem Metallband (11, 12) auf mindestens eine Oberfläche (21, 22) des Netzes (1) aufgeklebt wird.

8. Vorrichtung zum Abziehen des Netzes nach einem der Ansprüche 1 bis 6 von seinem Träger, mit einer Halterung für den Träger, **dadurch gekennzeichnet**, daß ein Detektor vorgesehen ist, der eine Markierung, die darauf hinweist, daß beim Abziehen des Netzes (1) von dem Träger (3) in bestimmtem Abstand (7) von der Markierung das Netzende (2) erreicht werden wird, erkennt und daraufhin ein Netzende-Signal (18) ausgibt, und daß der Detektor mindestens einen Metalldetektor (15) aufweist.

9. Vorrichtung nach Anspruch 8, **dadurch gekennzeichnet**, daß mindestens einer der Metalldetektoren (15) stromab der Halterung (13) für den Träger (3) an einer Stelle über dem Randbereich (6) des Netzes (1) angeordnet ist, an der sich keine weiteren metallischen Bauteile der Vorrichtung (20) in der Nähe des Randbereichs (6) des Netzes (1) befinden.

10. Verwendung des Netzes nach einem der Ansprüche 1 bis 6 in Verbindung mit der Vorrichtung nach Anspruch 8 oder 9, **dadurch gekennzeichnet**, daß nach dem Netzende-Signal (18) des Detektors das Netz (1) bis zu seinem Netzende (2) von dem Träger (3) abgezogen wird, daß der Träger (3) aus der Halterung (13) entfernt und der Träger eines neuen Netzes in die Halterung (13) eingebracht wird, daß das Netzende (2) des alten Netzes (1) mit dem Netzanfang des neuen Netzes vernäht wird und daß dann das neue Netz von seinem Träger abgezogen wird.
